# EUROPEAN PATENT APPLICATION

(11) **EP 4 685 719 A1**
(43) Date of publication of application: **28.01.2026**
(21) Application number: 24191193.2
(22) Date of filing: 26.07.2024
(51) Int. Cl.: G06Q 20/06, G06Q 20/36

(54) **SECONDARY DIGITAL MONEY WALLET**

(71) Applicant: Giesecke+Devrient advance52 GmbH, 81677 München (DE)
(72) Inventor: Riedl, Teresa, 81677 München (DE); Hupel, Lars, 81677 München (DE); Bruls, Tom, 81677 München (DE)
(74) Representative: Giesecke+Devrient IP

(57) **Abstract**

The present invention relates to a digital money wallet (1) of a user for a digital money transaction system,
wherein digital money wallet (1) is adapted to receive digital money (10) from another wallet of the digital money transaction system - in an offline transaction (120) or in a funding step - and to store the received digital money (10);
wherein the digital money wallet (1) stores funding control information (15).

The digital money wallet (1) is a local digital money wallet of the user; and
the funding control information (15) comprises a funding address, preferably a wallet identifier (61), of a hosted digital money wallet (6) of the user in the digital money transaction system, such that an automatic remote funding (103) from the hosted digital money wallet (6) of the user to the local digital money wallet (1) can be locally triggered.

## Description

The invention relates to a digital money wallet of a digital money transaction system.

In the field of digital money systems, including digital currency systems, account-based systems and token-based systems form well known different approaches.

Many of the recent account-based systems use blockchains, wherein ownership of the digital money is transferred within the blockchain, e.g. by changing the assignment from one account to another account.

In token-based digital money systems typically a monetary value token is transferred between secure wallets storing the tokens. For example EP 3 671514 B1, WO 2020/212331 A1, WO 2021/170646 A1, WO 2023/011758 A1 and WO 2023/011761 A1 disclose different aspects of such systems. Monetary value tokens typically can be used offline and online.

A wallet for storing and exchanging the digital money, e.g. monetary value tokens, may be provided to a user by a financial service provider. The wallet could e.g. be a local wallet, such as a smart card or a secure element (SIM...) in a user device (phone), or a hosted wallet hosted by the financial service provider. The user may pay, via cash or account, a third party to receive digital money, e.g. monetary value tokens, in return from the third party, e.g. at an ATM. Particularly for hosted wallets and based on an existing user account some financial service providers intend to offer an automatic funding. For example, if the balance of the hosted wallet is below a funding threshold and if a payment from the user account to the account of the financial service provider has occurred, the hosted wallet automatically receives new digital money (e.g. monetary value tokens) from the financial service provider.

According to an object of the invention a digital money wallet shall be provided which improves (system) security, preferably with remaining or increased flexibility and/or with remaining or decreased management effort.

The above-identified objectives are solved with the features of the independent claims. Further advantageous embodiments are described in the dependent claims.

According to an aspect of the present invention, there is provided a digital money wallet, e.g. a monetary value token wallet, of a user for a digital money transaction system,
wherein the digital money wallet is adapted to receive digital money, e.g. a monetary value token, from another wallet of the digital money transaction system - in an offline transaction or in a funding step - and to store the received digital money;
wherein the digital money wallet stores funding control information.

The digital money wallet is a local digital money wallet of the user; and
the funding control information comprises a funding address, preferably a wallet identifier, of a hosted digital money wallet of the user in the digital money transaction system, such that an automatic remote funding from the digital money wallet of the user to the local digital money wallet can be locally triggered.

Since the proposed automatic remote funding is internal within the, digital money transaction system, e.g. monetary value token system, (and does not even include third party wallets), security is improved. The present automatic remote funding may be referred to as a (digital money) system internal and/or user internal automatic remote funding. Particularly, a security aspect in a bank account or a in credit card system or even its local use, e.g. at unknown devices, does not affect the digital money wallet or system anymore.

The local digital money wallet preferably is a secondary wallet to the hosted digital money wallet, a primary wallet. In a transaction the secondary wallet is only used if the primary wallet is not available. Hence, in a transaction the primary wallet, i.e. the hosted digital money wallet of the user, will always be used, if available. The local digital money wallet however may only be used as a substitute wallet/ the secondary wallet. The hosted digital money wallet of the user may not be available e.g. in an offline scenario and/or if the server hosting the hosted wallet is temporarily not available. A user may have one or more secondary wallets, the local digital money wallet and further local digital money wallets, for his primary wallet, the hosted digital money wallet.

The local digital money wallet of the user (and/or further local digital money wallet(s) of the system) may be a secure element (or in a secure element), preferably a portable secure element, - such as a smart card, a secure SD card, a SIM card, a secure USB unit or a RFID (or NFC) unit - or an embedded secure element - such as an embedded SIM module, a TPM module, a NFC module or an IoT security module - or an integrated secure element - such as an iSIM unit, iTPM unit or even TEE (trusted execution environment). The secure element comprises the local digital money wallet and optionally one or more further security applications. A (user) device of the user - such as a smart phone, wearable, computer or IoT device - may comprise the local digital money wallet, preferably in an embedded or integrated secure element of the device or alternatively as a secured application of the device.

The hosted digital money wallet of the user is typically hosted on a trusted/secure wallet server which hosts wallets of multiple users. A third party or a financial service provider, which may be a commercial bank, may provide hosted wallets of the digital money transaction system on his secure wallet server. The hosted digital money wallet of the user may send digital money to the local digital money wallet, particularly upon request. The hosted digital money wallet of the user may be referred to as a remotely hosted and/or third party hosted wallet.

The funding address of the hosted digital money wallet of the user allows to send a funding request to the hosted digital money wallet. The funding address may be a wallet identifier uniquely identifying the hosted digital money wallet in the digital money transaction system. The funding address of the hosted wallet may comprise a server address part (of the wallet server hosting the hosted wallet) and a wallet address part (of the hosted wallet on the wallet server hosting the wallet).

Digital money wallets, including local and hosted digital money wallets, of the digital money transaction system preferably are monetary value token wallets. The digital money system being a monetary value token system. Monetary value token wallets, including local and hosted monetary value token wallets, of the monetary value token system may comprise one or more monetary value tokens. Monetary value token wallets being configured to exchange a monetary value token (in a transaction). Alternatively, the digital money wallets, including local and hosted digital money wallets, are digital money account wallets. The digital money system being an digital money account transaction system. A digital money account wallet preferably stores a balance of the digital money in the digital money account wallet. After an exchange of digital money (from or to the digital money account wallet) and/or after the funding the balance is changed accordingly.

Preferably, in the digital money system (or the monetary value token system) the hosted digital money wallet is used in online transactions (only). The (or the further) local digital money wallet(s) may be used in offline transactions (only). In an offline transaction digital money, e.g. a monetary value token, of the digital money system is exchanged (sent and/or received) locally between local digital money wallets. Hence, in the preferred variant the local digital money wallet(s) of the user is (are) only used for (local) offline transactions and only the hosted digital money wallet of the user is used for (remote) online transactions.

It is particularly advantageous that the digital money wallet is configured to provide the funding control information to a wallet management device which triggers the automatic remote funding (if required). The wallet management device may be a (user) device of the user comprising the digital money wallet, may be an external device, such as a separate user device of the user, e.g. smartphone or computer, or a third party device, e.g. a device of a transaction partner, a merchant terminal or a service terminal.

The funding control information may be used to, preferably alternatively to the remote funding, trigger an automatic local funding from a further local digital money wallet. The user preferably has two or more further local digital money wallets.

The funding control information may be provided to a wallet management device. The wallet management device is thereby enabled to send a funding request to the funding address (i.e. to the hosted digital money wallet).

A current value of the digital money of the digital money wallet may be provided to a wallet management device. The monetary value(s) of the one or more monetary value tokens currently stored in the local monetary value token wallet may be provided. Particularly a sum of the monetary values of the stored tokens may be provided or separate monetary values of the stored tokens may be provided. For an account wallet the current balance may be provided as the current value.

The funding control information may further comprise
- a funding value, being the monetary value of the digital money to be received in a funding and/or indicating that funding is required; and/or
- a target value of the monetary value of the digital money in the local digital money wallet; and/or
- a minimum value of the monetary value of the digital money in the local digital money wallet; and/or
- a maximum value of the monetary value of the digital money in the local digital money wallet.

The wallet management device is thereby enabled to evaluate, if a funding is required (current value < minimum value OR current value < target value OR funding value > 0) and/or to request the remote funding. A funding may be requested for a funding value. The funding value may be calculated by the wallet management device (e.g.: target value - current value) or provided by the local digital money wallet. The funding value provided by the local digital money wallet may be dynamically calculated by the local digital money wallet, particularly based on the current value, or may be a static funding value (independent from the current value). A funding value of zero may indicate that no funding is required. A funding value (<> 0) may indicate that funding is required (and represent the value to be funded) or represent the value to be funded, e.g. as a (static or dynamic) wallet specific value or as a static system-wide value. The funding value could even indicate that defunding is required (negative value). The maximum value may be used to evaluate, if defunding is required.

The funding control information may comprise funding authentication information, preferably a reference to a funding authentication key stored in the local wallet, a funding authentication key or a one-time funding authentication value.

Funding and/or defunding may be local or remote. Hence, digital money, preferably a monetary value token, may be received in the funding step from the further local wallet of the user or from the hosted wallet of the user or may be sent in a defunding step to the further local wallet of the user or to the hosted wallet of the user.

In a variation the monetary value token wallet stores used monetary value tokens and/or one or more unused tokens received in a remote funding step, wherein in a defunding step only the unused tokens maybe deleted (without having to be send). Generally, monetary value tokens stored in a wallet of the monetary value token system have to be sent to another wallet before being deleted (no money shall be destroyed in wallets). The used monetary value tokens maybe not be deleted in the defunding step in the monetary value token wallet without having been sent. By directly deleting the unused token (without sending) in the defunding step defunding may be slightly accelerated.

According to another aspect of the present invention, there is provided a wallet management device, comprising a user interface unit, such as a display unit; a local communication unit, such as a card reader, a USB unit, a NFC unit or a (LE) Bluetooth unit; a remote communication unit, such as a wide area network, internet or mobile network communication unit and a wallet management application. The local communication unit enables communication with one or more local digital money wallets, preferably device internal local wallets and/or device external local wallets. The remote communication unit enables communication with the a hosted wallet of the user. The wallet management application controls the local communication unit to receive wallet information from the one or more local digital money wallets and controls the display unit to display wallet meta information for the user.

The wallet information of at least one of the local digital money wallets comprises funding control information, particularly as described above. The funding control information comprises a funding address, preferably a wallet identifier, of a hosted digital money wallet of the user in the digital money transaction system. The wallet management application locally triggers an automatic remote funding from the hosted digital money wallet of the user to the local digital money wallet.

The wallet management device preferably is an external device and may be a third party device, such as a merchant terminal or a third party device (e.g. of the transaction partner). The wallet management device may be a user device, such as a smart phone, tablet or computer, optionally including the local digital money wallet.

Preferably, the wallet management application only displays wallet meta information for one of a primary wallet and a secondary wallet. It displays either the wallet meta information of the hosted digital money wallet, being the primary wallet, or the wallet meta information of the local digital money wallet, being the secondary wallet.

The wallet management application is configured to send a funding request to the hosted digital money wallet of the user (or to a further local wallet of the user). It may be configured to evaluate if funding is required, to evaluate if local funding is possible and/or to decide whether local or remote funding to the local digital money wallet is triggered, particularly based on the received funding control information respectively.

The funding request preferably includes one or more of:
a wallet identifier of the local digital money wallet,
a funding value, indicating the monetary value of the digital money to be received in the remote funding,
and optionally
a target value of the digital money in the local digital money wallet,
a current value of the digital money in the local digital money wallet, e.g. the current balance or the current value of monetary value token(s) and/or
a funding authentication information.

Moreover, the wallet management application may be configured to select a digital money wallet (e.g. from the digital money wallet, the hosted digital money wallet and the further local wallets) for a transaction, based on one or more of the following:
- a transaction amount;
- a current value in the one or more local digital money wallets or the hosted digital money wallet, e.g. the current balance or the current value of monetary value token(s);
- selection preferences stored in the wallet management application; and/or
- received user input.

In preferred variants the hosted digital money wallet of the user is linked with an account of the user, e.g. a bank account, credit card account or another digital money account. The server hosting the hosted digital money wallet is configured to debit a monetary value - of digital money, e.g. a monetary value token, (to be loaded or) loaded to the hosted digital money wallet - from the account of the user. In an online transaction or in a funding step digital money will be automatically loaded to the hosted digital money wallet (funded to the hosted wallet by the server) if required, e.g. if a current value of the digital money is too low for the transaction/funding step.

The wallet management application may be configured to only use in a transaction (preferably regardless of the transaction details) the hosted digital money wallet only, if the hosted digital money wallet is available. The wallet management application selects the local (secondary) digital money wallet of the user only if the hosted digital money wallet is unavailable. Basically, only if the server hosting the hosted wallet is not working or if no remote connection to the hosting server is available (neither in the wallet management device nor in a possible transaction partner device), the local (secondary) digital money wallet of the user will be used for the transaction.

A user system may comprise:
- the wallet management device described above; and
- the digital money wallet of a user as described above; and
- optionally one or more further local digital money wallets of the user.

A wallet system may comprise:
- the above user system; and
- the hosted digital money wallet of the user, preferably hosted on a server of a wallet service provider.

In the wallet system the hosted digital money wallet may be configured to send digital money to the local digital money wallet of the user in response to a funding request for the local digital money wallet of the user. Preferably, the hosted digital money wallet is linked with an bank account or other account of the user.

A digital money system comprises
- the above wallet system; and
at least one central digital money (e.g. monetary value token) system unit, preferably: a token (reference) register; and/or a digital money issuer unit, e.g. token issuer unit, preferably a central bank unit; and/or a transaction logging unit.

A monetary value token typically comprises one or more of the following data elements: a value data element, a token individual secret, preferably a secret key of a key pair, a token reference, preferably derived from the token individual secret and/or a public key of a key pair, and a token issuer information. The monetary value token preferably consists of the value data element and the token individual secret. A monetary value token reference preferably consists of the value data element and a token individual public key.

The monetary value token transaction system preferably comprises one or more token issuers and/or a token reference register. For example WO 2021/170646 A1, WO 2023/011758 A1, WO 2023/011761 A1 and WO 2024/027869 A1 show details of possible monetary value token transaction systems.

In the following, the invention or further embodiments and advantages of the invention are explained in more detail based on drawings, wherein the drawings describe only some of the possible embodiments of the invention. At least elements drawn with dashed lines are considered as optional elements.

The drawings are not to be regarded as true to scale, and individual elements of the drawings may be shown in exaggeratedly large or exaggeratedly simplified form.
Fig. 1 shows a local monetary value token wallet and a remote funding from a hosted monetary value token wallet of the user; and
Fig. 2 shows a remote funding from a hosted monetary value token wallet of the user to a local monetary value token wallet and an optional local funding.

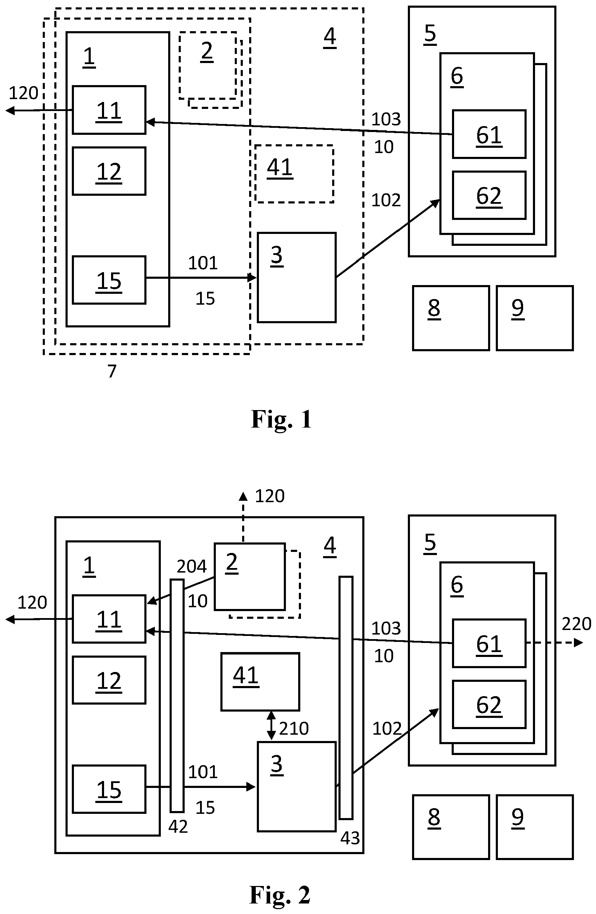

With respect to Fig. 1 and 2 the embodiments are described for a digital money system being a monetary value token system.

In Fig. 1 a local monetary value token wallet 1 (short: local wallet 1) of a monetary value token system is illustrated. The local monetary value token wallet 1 of a user stores one or more monetary value tokens in a token storage area 11 and stores funding control information 15. The monetary value token wallet 1 can locally exchange, send or receive, a monetary value token in an offline transaction 120 with another monetary value token wallet (not shown).

The funding control information 15 comprises a funding address of a hosted monetary value token wallet 6 of the user (short: hosted wallet 6). The hosted monetary value token wallet 6 and further hosted monetary value token wallets of other users are hosted by a hosted wallet (service) provider 5.

In a remote funding step 103, the local monetary value token wallet 1 receives a monetary value token 10 from the hosted monetary value token wallet 6. The local monetary value token wallet 1 stores the received monetary value token 10 in the token storage area 11. It may use the received monetary value token 10 ( or a token derived therefrom) in a subsequent local offline transaction 120 with another local wallet.

The remote funding step 103 is locally triggered by a local wallet management unit 3 reading 101 the funding control information 15 of the local wallet 1 (funding control information transmission 101). Based on the funding control information 15 it can be evaluated by the wallet management unit 3, if a funding is required for the local wallet 1.

Using the funding address of the funding control information 15 the wallet management unit 3 may send 102 a funding request to the hosted monetary value token wallet 6 (funding request transmission 102). The funding address could be a wallet identifier 62 of the hosted wallet 6 and/or the address of the hosted wallet service provider 5. Optionally a wallet identifier 12 of the local wallet 1 may be used in the hosted wallet service provider 5 to identify the hosted wallet 6 of the user. Monetary value token wallets 1, 2, 6 in the monetary value token system comprise a wallet identifier 12, 62 for uniquely identifying the wallet in the monetary value token system.

The funding control information 15 - besides the funding address - may comprise e.g. a funding value or a target value. The funding value may be used to indicate that funding is required (funding value = 0: no funding; funding value > 0; funding required). In addition the funding value may represent a monetary value of the token to be received in the funding step 103. In case that the funding value indicates if funding is required, the funding value may be static, e.g. a standard funding value for the wallet - preferably selected by the user, or it may be calculated in the local wallet based on a current value of the stored monetary value token(s) and a target value. For example, a target value of 100 minus a current value of 20 leads to a calculated funding value of 80. However, a target value of 100 and a current value of 130 leads to a funding value of zero (no funding required). If the current value of the monetary value tokens stored in the local wallet 1 is provided to the wallet management unit 3, it may calculate the monetary value of the monetary value token to be received in a funding step (e.g. based on the current value and the target value and/or a minimum value) or use the funding value included in the funding control information 15.

The funding control information 15 may include a minimum value (and a maximum value) for the monetary value of the stored monetary value tokens. The minimum value would be a threshold for the current value in the evaluation, if funding is required (if current value < minimum value: yes; else: no). The maximum value would be a threshold for the current value in the evaluation, if a defunding step is required (if current value > maximum value: yes; else: no). The current value and the minimum/maximum value enable the wallet management unit 3 to evaluate, if funding/defunding is required.

The monetary value token is issued by a token issuer unit 8 of the monetary value token system. The monetary value token preferably is a central bank digital currency token, the token issuer being a central bank.

The monetary value token system further comprises a token register, preferably being a token reference register 9. The hosted wallet 6 may comprise a token storage area 61 for storing one or more monetary value tokens. For example WO 2021/170646 A1, WO 2023/011758 A1, WO 2023/011761 A1 and WO 2024/027869 A1 show details of possible monetary value token transaction systems, in particular regarding the token register and/or hosted wallets. A transaction logging unit (not shown) may additionally exist. This is particularly relevant since the token reference register does neither include transaction details (the wallets of the transaction and/or the transaction number ...) nor the monetary value tokens, but only stores valid token references.

In Fig. 1 furthermore some optional aspects have been indicated by dashed lines. A local device 4 comprises the local wallet management unit 3. The local device 4 may be a third party device, like a merchant terminal or a smartphone of another user, or a local device 4 of the user.

The local device 4 will typically comprise a user interface unit 41. The user interface unit 41 is used to present/ display transaction data (in a step of the transaction) or wallet meta data (in a wallet selection step) to the user and/or to receive user input, e.g. transaction data or a wallet selection input from the user.

The local device 4 may comprise the local wallet 1 and/or further monetary value token wallets 2 of the user, in particular if it is a local device 4 of the user. The local device may comprise one or more local wallets 1, 2 of the user, e.g. in different secure elements such as SIM card, SD card or eSIM module, and/or may comprise a local communication unit (not shown) for communicating with one or more (device internal or device external) local wallets 1, 2 of the user.

The local wallet 1 of the user may also be a separate secure element, such as a smart card or RFID token or USB token. Furthermore, a user device 7 may comprise the local wallet 1 of the user (and one or more further local wallet 2).

A local communication unit 42, such as NFC unit or card reader or USB unit, and a remote communication unit 43, such as internet protocol unit or (mobile) communication network unit, of the local device 4 are additionally illustrated in Fig. 2.

Fig. 2 shows a local device 4 comprising the local monetary value token wallet 1 of the user and one or more further monetary value token wallets 2 of the user.

With regard to Fig. 2 basically three (independent) aspects will be described: wallet configuration, wallet selection and local funding.

The wallet management unit 3 may display wallet meta information for one or more wallets of the user on the user interface unit 41 of the local device 4. The wallet meta information may comprise a wallet name, for example only: "hosted wallet" or "mySIM wallet" or "myBank-card 2". The wallet name of the wallet may be selected by the user. The wallet meta information may comprise a current value of the monetary value tokens of the wallet. The wallet meta information may comprise user preferences of the wallet.

User preferences (user configuration data) can be selected by the user and are stored in the respective wallet 1, 2, 6 (or the local device 4). Data elements, such as the funding value or the minimum value, included in the funding control information 15 may also be user preferences.

A list of existing wallets of the user may be presented to the user on the local device 4. The list of existing wallets could for example be used for setting the user preferences/configuration data in the local device 4 and/or the wallets 1,2,6. Both the local wallet 1 and the hosted wallet 6 would be included in the list, their wallet meta information be displayed.

In a wallet configuration phase the list of existing wallet may be displayed on the user interface unit 41 for the user. The wallet management application may receive user preference input (user configuration data) from the user interface unit 41. A wallet configuration phase is independent from a transaction and/or may be performed anytime.

In a pre-transaction phase a wallet selection step 210 may be performed. In the pre-transaction phase typically also the transaction partner wallet and the transaction value are defined for the transaction, e.g. based on user input or from a received transaction request.

From the wallets of the user one wallet is selected in the wallet selection step. The wallet for a current transaction may be selected automatically in the wallet management unit 3. For example, the user may define wallet selection parameters in the configuration phase. Alternatively the wallet management unit 3 may display a list of possible wallets for the transaction and receive a user selection input. The list of possible wallets is displayed on the user interface unit 41 and the user selection input is received from the user interface unit 41. The list of possible wallets of the user is created as a pre-selection of the existing wallets of the user.

The wallet management unit 3 is configured to exclude a secondary wallet from the wallet selection, if the primary wallet is available. Hence, the secondary wallet, e.g. local wallet 1, of the primary wallet, e.g. hosted wallet 6, would only be used in a transaction, if the primary wallet, the hosted wallet 6, is not available. The primary wallet, the hosted wallet 6, would be used in the transaction or at least considered as a possible wallet in the wallet selection step 210. The wallet management unit 3 for a transaction would normally exclude the secondary local wallet in the automatic selection and/or would exclude the secondary wallet from the displayed list of possible wallets.

Thus, after the pre-transaction phase either an offline transaction 120 from the local wallet 1 or from the further local wallet 2 or an online transaction 220 from the hosted wallet 6 may occur. A monetary value token is transferred from the wallet 1, 2 to the transaction partner wallet.

Returning now to the funding, the wallet management unit 3 of the local device 4 may in addition to or alternatively to a remote funding step 103 trigger a local funding step 204. The wallet management unit 3 may decide to perform a local funding 204 from the further local monetary value token wallet 2 to the local monetary value token wallet 1, particularly if funding is required. Al local funding to the local wallet 1 however may occur even if not required for the local wallet 1. A monetary value token, e.g. of the funding value or the calculated value, would be locally transferred in step 204.

### REFERENCE SIGNS

- 1: local monetary value token wallet
- 2: further local monetary value token wallet
- 3: wallet management unit
- 4: local device
- 5: hosted wallet service provider
- 6: hosted monetary value token wallet
- 7: user device
- 8: token issuing unit
- 9: token reference register

- 10: monetary value token
- 11, 61: token storage area
- 12, 62: wallet identifier
- 15: funding control information
- 41: user interface unit
- 42: local communication unit
- 43: remote communication unit

- 101: funding control information transmission
- 102: funding request transmission
- 103: remote funding step
- 120: offline transaction

- 204: local funding step
- 210: wallet selection step
- 220: online transaction

## Claims

1. A digital money wallet (1) of a user for a digital money transaction system,
wherein digital money wallet (1) is adapted to receive digital money (10) from another wallet of the digital money transaction system - in an offline transaction (120) or in a funding step - and to store the received digital money (10);
wherein the digital money wallet (1) stores funding control information (15);
**characterized in that**
the digital money wallet (1) is a local digital money wallet of the user; and
the funding control information (15) comprises a funding address, preferably a wallet identifier (61), of a hosted digital money wallet (6) of the user in the digital money transaction system, such that an automatic remote funding (103) from the hosted digital money wallet (6) of the user to the local digital money wallet (1) can be locally triggered.

2. The digital money wallet (1) of claim 1, **characterized in that** the local digital money wallet (1) is a secondary wallet of the hosted digital money wallet (6), a primary wallet, wherein in a transaction the secondary wallet is only used if the primary wallet is not available.

3. The digital money wallet (1) of one of the preceding claims, **characterized in that** the funding control information (15) is used to, preferably alternatively, trigger an automatic local funding (204) from a further local digital money wallet (2) of the user, preferably the user having two or more further local wallets.

4. The digital money wallet (1) of one of the preceding claims, **characterized in that** it is provided to a wallet management device: the funding control information (15) and/or a current value of the digital money in the digital money wallet.

5. The digital money wallet (1) of one of the preceding claims, **characterized in that** the funding control information (15) further comprises
- a funding value, being the monetary value of the digital money to be received in a funding step and/or indicating that funding is required; and/or
- a target value of the monetary value of the digital in the local digital wallet (1); and/or
- a minimum value of the value of the digital money in the local digital money wallet (1); and/or
- a maximum value of the value of the digital money in the local digital money wallet (1).

6. The digital money wallet (1) of one of the preceding claims, **characterized in that** the funding control information (15) further comprises funding authentication information, preferably a funding authentication key or a one-time authentication value.

7. The digital money wallet (1) of one of the preceding claims, **characterized in that** the digital money is a monetary value token (1) in the digital money wallet being a monetary value token wallet (1) of the digital money transaction system being a monetary value token transaction system.

8. A wallet management device (4), comprising:
- a user interface unit (41);
- a local communication unit (42) for one or more local digital money wallets (1,2), preferably device internal wallets and/or device external hardware wallets;
- a remote communication unit (43); and
- a wallet management application (3), which controls the local communication unit (42) to receive wallet information from the one or more local digital money wallets (1, 2) and which controls the display unit to display wallet meta information for the user;
**characterized in that**
- the wallet information of at least one of the local digital money wallets (1,2) comprises funding control information (15); and
- the funding control information (15) comprises a funding address, preferably a wallet identifier (62), of a hosted digital money wallet (6) of the user in the digital money transaction system, such that an automatic remote funding (103) from the hosted digital money wallet (6) of the user to the local digital money wallet (1) can be locally triggered by the wallet management application (3).

9. The wallet management device (4) according to claim 8, **characterized in that** the wallet management application (3) only displays wallet meta information for one of a primary wallet and a secondary wallet, displays either the wallet meta information of the hosted digital money wallet (6), being the primary wallet, or wallet meta information of the local digital money wallet (1), being the secondary wallet.

10. The wallet management device (4) according to claim 8 or 9, **characterized in that** the wallet management application (3) is configured to select a digital money wallet (1,2, 6) for a transaction (120, 220), based on one or more of the following:
- a transaction amount;
- a current value in the one or more local digital money wallets or the hosted digital money wallet;
- selection preferences stored in the wallet management application; and/or
- received user input.

11. The wallet management device (4) according to one of claims 8 to 10 **characterized in that** the wallet management application (3) is configured to send a funding request (102) to the hosted digital money wallet (6) of the user, the funding request (102) preferably including one or more of: a wallet identifier (62) of the local digital money wallet (1), a current value of the digital money in the local digital money wallet (1), a target value of the digital money in the local digital money wallet (1) and/or a funding authentication information.

12. The wallet management device (4) according to one of claims 8 to 11 the digital money is a monetary value token (1) in the local digital money wallet and preferably in the hosted digital money wallet, being a local monetary value token wallet (1) and preferably a hosted monetary value token wallet (6) respectively, of the digital money transaction system, being a monetary value token transaction system.

13. A user system comprising:
- the wallet management device (4) according to one of claims 8 to 12; and
- the digital money wallet (1) of a user according to one of claims 1 to 7; and
- optionally one or more further local digital money wallets (2) of the user.

14. A wallet system comprising:
- the user system (1, 4) of claim 13; and
- the hosted digital money wallet (6) of the user, preferably hosted on a server of a wallet service provider (5).

15. The wallet system according to claim 14, **characterized in that** the hosted digital money wallet (6) is configured to send digital money, preferably a monetary value token, to the local digital money wallet (1) of the user in response to a funding request (102) for the local digital money wallet (1) of the user, wherein preferably the hosted digital money wallet (6) is linked with an account of the user.

16. A digital money transaction system comprising
- the wallet system (1, 4, 6) according to claim 13; and
at least one central digital money system unit, preferably:
- a digital money register (8);
- a digital money issuer unit (9), preferably a central bank unit; and/or
- a transaction logging unit.
